Europäisches Patentamt

European Patent Office

Office européen des brevets

(19)

(11) Publication number: **0 121 670**
**B1**

(12) **EUROPEAN PATENT SPECIFICATION**

(45) Date of publication of patent specification: **11.11.87**

(21) Application number: **84101141.4**

(22) Date of filing: **14.05.79**

(80) Publication number of the earlier application in accordance with Art. 76 EPC: **0 030 230**

(51) Int. Cl.⁴: **F 16 C 25/08, F 01 D 25/16, F 01 D 25/18**

(54) A bearing assembly structure.

(43) Date of publication of application:
**17.10.84 Bulletin 84/42**

(45) Publication of the grant of the patent:
**11.11.87 Bulletin 87/46**

(84) Designated Contracting States:
**DE FR**

(56) References cited:
**FR-A-2 208 477**
**FR-A-2 209 423**
**GB-A- 248 353**
**GB-A- 663 693**
**GB-A- 695 016**
**GB-A- 770 430**
**US-A-2 492 672**
**US-A-2 888 302**
**US-A-2 991 926**
**US-A-3 004 806**
**US-A-3 516 717**
**US-A-3 770 991**
**US-A-3 825 311**

(73) Proprietor: **OSBORN, Norbert L.**
**151 Regal Row Suite 120**
**Dallas TX 75247 (US)**

(72) Inventor: **OSBORN, Norbert L.**
**151 Regal Row Suite 120**
**Dallas TX 75247 (US)**

(74) Representative: **UEXKÜLL & STOLBERG**
**Patentanwälte**
**Beselerstrasse 4**
**D-2000 Hamburg 52 (DE)**

Courier Press, Leamington Spa, England.

## Description

The present invention relates to a bearing assembly structure for supporting the rotation of a compressor rotor and a turbine rotor mounted for rotation on a compressor shaft.

In many applications, turbocharging may be used to permit the use of engines having smaller, "effective engine size." By turbocharging, it is relatively easy to obtain twice the naturally aspirated power per cubic centimeter (inch) of displacement and in some cases three times the power. However, attempts to turbocharge smaller engines have generally been unsuccessful. This failure can generally be attributed to the present design of turbochargers which are built around a journal bearing and a flat disc type thrust bearing. This type bearing system requires from 0.74 to 2.2 kW (one to three horsepower) (depending upon the particular turbocharger and the speed required in the application) just to overcome friction. While this loss may be insignificant in applications where turbines are required to develop in excess of 22 kW (thirty horsepower) for the compression process (typically engines of 147 or more kW (200 or more horsepower)), it becomes very significant when turbocharging engines having less than 73.5 kW (100 horsepower). For example, where the turbocharger turbine power is 44—58.8 kW (60—80 horsepower), a bearing friction loss of 1.5—2.2 kW (2—5 horsepower) is insignificant. However, in a smaller turbocharger where the turbine power is only 11 kW (15 horsepower), a bearing friction loss of 1.5—2.2 kW (2—3 horsepower), or more likely 3—3.7 kW (4—5 horsepower) due to the higher rpm at which the smaller turbochargers are operated, represents almost a third of the total turbine horsepower produced and is completely unacceptable.

The presently used bearing systems also require considerable radial and axial clearances to provide for oil flow and rotor stability. These clearances are translated into a relatively large clearance over the blading of the compressor and turbine rotors thereby affecting the efficiency of both the compressor and turbine. For example, the journal and disc thrust bearings, commonly used in present day turbochargers, may require a clearance of 0.38 mm (0.015 inches) between the turbine and compressor blades and the surround structure. Where the blade height is 2.54 cm (1 inch), the clearance to blade height ratio is only 1½ percent. However, where a smaller turbocharger is desired, having blade heights of, for example, 5.1 mm (0.2 inches), a clearance of 0.38 mm (0.015 inches) between the blades and surround structure amounts to 7½ percent of the blade height. Therefore, where a 0.38 mm (0.015 inch) clearance is acceptable in larger turbocharger applications, it is completely unacceptable when smaller turbochargers are being designed. Therefore, in smaller turbochargers, this clearance becomes more and more critical to the overall performance of the turbocharger and ultimately to the performance of the engine.

The bearing systems now being used in turbochargers are lubricated with engine oil, although most bearing failures are the result of contaminated engine oil or lack of engine oil pressure during starts. Where high speed journal bearings are used in a conventional turbocharger, continuous oil flow is inherently required to provide shaft stability as well as to carry away heat generated by viscous friction. Oil flow is also required to carry away the heat transferred into the bearing system from the adjacent turbine (which operates at temperatures as high as 871°C (1600 degrees F)). Even if antifriction ball bearings were substituted for the journal bearings in conventional turbochargers, a continuous oil flow would be required to carry away heat transferred from the turbine. Thus, while lubrication is a necessity for the proper operation of present day turbochargers, lubrication also accounts for many of the failures. Further, continuous oil flow lubrication requires substantial plumbing and associated structure for providing the lubricant to the bearings.

In a prior turbocharger (US—A—2,991,926) the bearing assembly structure comprises first and second inner raceways consisting of rings forming parts of conventional ball bearings and being pressed on the compressor shaft.

By using such press-on raceways, eccentricities which exist in such raceways relative to the axis of the bore through the press-on raceways will result in an eccentricity between the raceway and the rotational axis of the compressor shaft. Such eccentricities result in vibrations of the compressor shaft rotating with high speed so that wide compressor and turbine rotor clearances are required.

A similar bearing assembly structure for a turbine is shown in GB—A—770,430 which bearing assembly structure comprises ring-like inner raceways pressed onto the turbine shaft with one outer raceway fixed relative to an outer sleeve housing and the other outer raceway slidable relative to the first outer raceway. Again the press-on raceways result in eccentricities which cause vibrations of the turbine shaft when it rotates at high rpm.

Another bearing assembly structure for a small rotor to be used e.g. in textile industry (FR—A—2,208,477) comprises inner raceways having the form of annular grooves provided in the rotor shaft.

In the operation of a turbocharger its compressor shaft rotates at very high rpm so that not only low vibration is desired but also lubrication of the bearings is important and contact has to be maintained between all balls of such bearings and their inner and outer raceways.

It is therefore object of the invention to provide for a bearing assembly structure for a turbocharger with an effective lubricating system which bearing assembly structure facilitates reduction of the required compressor and turbine rotor clearances.

Such objective is achieved by a bearing assembly structure for supporting the rotation of a compressor rotor and a turbine rotor mounted for rotation on a compressor shaft, having first and second inner raceways provided on said compressor shaft, an outer sleeve housing having a first outer raceway fixed relative thereto corresponding to the first inner raceway for receiving a plurality of balls between said first outer raceway and said first inner raceway, a second outer raceway corresponding to said second inner raceway for receiving a plurality of balls between said second outer raceway and said second inner raceway, said first outer raceway has a curved ball receiving surface only on the side facing away from said second outer raceway, said second outer raceway has a curved ball receiving surface only on the side facing away from said first outer raceway, and spring means for biasing a ring comprising said second outer raceway away from said first outer raceway to retain the balls between said inner and outer raceway which bearing assembly structure is characterized in that said first outer raceway is fixed relative to said outer sleeve housing, that said first and second inner raceways are formed in said compressor shaft, that a first inclined circumferential ramp is formed in said compressor shaft and angled toward the balls positioned between the first inner and outer raceways and lubricant supplying means are provided for supplying lubricant to said first inclined ramp through a wick with one end in contact with the lubricant and the opposite end in contact with the inclined ramp such that lubricant is applied to the first inclined ramp and carried by centrifugal force to the balls during rotation of said compressor shaft and that a second inclined circumferential ramp is formed in said compressor shaft and angled toward the balls positioned between the second inner and outer raceways and lubricant supplying means are provided for supplying a lubricant to said second inclined ramp through a wick having one end in contact with the lubricant and the opposite end in contact with the second inclined ramp such that said lubricant is applied to the second inclined ramp and carried by centrifugal force to the balls during rotation of said compressor shaft.

In the bearing assembly structure according to the invention the first outer raceway is fixed relative to the outer sleeve housing and thereby prevents movement of the compressor shaft in one axial direction whereas the spring means apply an axial force to the second outer raceway pressing such outer raceway in such one axial direction and thereby preventing movement of the compressor shaft in the other axial direction. By such structure, not only exact positioning of the compressor shaft in axial direction is obtained, but by the force of the spring a thrust-load is acting on the ball bearings so that contact between all balls and both inner and outer raceways is maintained all the time as necessary for high speed ball bearings of such type.

Providing a lubricant system with the ramps to which lubricant is fed by wicks and wherefrom lubricant is carried to the balls of the ball bearings by centrifugal force results in a simple effective lubrication.

Manufacturing both the inner raceways and the ramps integrally with the compressor shaft does not only avoid the step of mounting ring-like inner raceways and possibly ring-like ramps on such compressor shaft but minimizes eccentricities between the rotation axis of the compressor shaft and the inner raceways and the ramps which eccentricities will exist when ring-like inner raceways and ring-like ramps are mounted on the compressor shaft. Thereby, the smooth running of the compressor shaft is improved and the compressor and turbine rotor clearances can be reduced.

For a more complete understanding of the present invention, and for further details and advantages thereof, reference is now made to the following description taken in conjunction with the accompanying drawings, in which:

FIGURE 1 is a perspective view of a turbocharger;

FIGURE 2 is a vertical section taken along lines 2—2 of the turbocharger illustrated in FIGURE 1;

FIGURE 3 is an enlarged view of the bearing assemblies supporting the compressor and turbine shaft of the turbocharger;

FIGURE 4 is a frontal view looking into the inlet port of the turbocharger illustrated in FIGURE 1;

FIGURE 5 is a section view taken along line 7—7 of FIGURE 4;

FIGURE 6 is a section view taken along line 8—8 of FIGURE 4;

FIGURE 7 is a section view taken along line 9—9. of FIGURE 4;

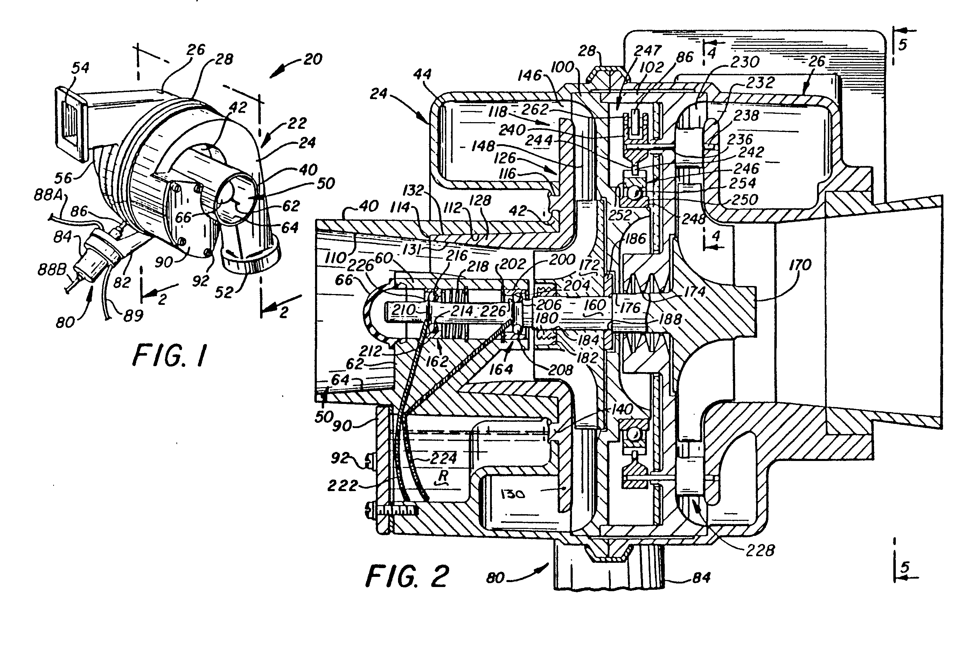

FIGURE 1 is a perspective view of a turbocharger 20 embodying the present invention. The turbocharger includes an outer structure 22 consisting of a compressor housing unit 24 coupled to a turbine housing unit 26 by a V-clamp band 28.

Referring to FIGURES 1 and 2, compressor housing unit 24 includes a tubular inlet port 40 with a transverse wall 42 attached to one end of port 40 and extending outwardly therefrom. A circumferential chamber 44 is attached from wall 42. Inlet port 40 defines a compressor air inlet 50 and circumferential chamber 44 defines a compressor exhaust 52. Turbine housing 26 defines a turbine air inlet 54 and a turbine exhaust 56.

In operation of the turbocharger, air is drawn into inlet 50 and compressed air is discharged from exhaust 52 to an internal combustion engine to which the turbocharger is mounted. Exhaust air from the engine is channeled into turbine air inlet 54 to drive the turbocharger turbine and is exhausted through turbine exhaust 56.

Referring still to FIGURES 1 and 2, a bearing support cylinder 60 is mounted within inlet port 40 by a plurality of vanes 62 extending from the inside wall surface 64 of inlet port 40. A cap 66 is mounted over the end of support cylinder 60. A piston type actuator 80 is mounted by bracket 82 (FIGURE 1) to turbine housing 26. Actuator 80 includes a controller 84 operated to extend and retract control rod 86 as will be discussed hereinafter in greater detail. Air lines 88 and 89 provide air to controller 84 as necessary to operate rod 86. An oil reservoir cover plate 90 is attached to compressor housing unit 24 by a plurality of screws 92.

Referring specifically to FIGURE 2, a compressor backwall 100 and a turbine backwall 102 are positioned intermediate of compressor housing unit 24 and turbine housing unit 26 when these two units are assembled. The four components are piloted one to another and held in assembly by V-clamp 28. As can be appreciated from a close review of FIGURE 2, only a single V-clamp is required to hold the entire assembly together. As previously described, compressor housing unit 24 includes a tubular inlet port 40 with a transverse wall 42 attached to one end thereof to one of the inlet ports and extending outwardly therefrom. A circumferential chamber 44 is attached to the end of wall 42 remote from inlet port 40 and has a varying area around its circumference increasing to the discharge provided by compressor exhaust 52 (FIGURE 1).

Inlet port 40 has a first inside wall portion 110 having a converging diameter toward wall 42 and a second inside wall portion 112 joined to first inside wall portion 110 by a step 114. The second inside wall portion 112 has a diverging diameter toward wall 42. Wall 42 has a plurality of circumferentially spaced apertures 116 therethrough. Chamber 44 has an opening 118 substantially in the plane of wall 42 in addition to compressor exhaust 52.

A forward compressor wall insert 126 includes a tubular throat 128 and a circular disc 130 attached transversely from one end of throat 128. Throat 128 has an inside wall surface 131 having a diameter converging toward disc 130 and an outer surface 132 having a diameter diverging toward disc 130. The diverging diameter surface 132 corresponds to the diverging surface of inside wall portion 112 of inlet port 40 such that throat 128 may be inserted within and mated with inlet port 40. The converging diameter inside wall surface 131 of throat 128 corresponds to the extension of converging diameter of first inside wall portion 110 of inlet port 40. When insert 126 is mated into inlet port 40, a continuous converging diameter is provided from the inlet of port 40 inwardly into the turbocharger.

A plurality of rivet-like protrusions 140 extend from disc 130 and correspond to apertures 116 in wall 42. With the insert engaged to compressor housing 24 with the end of throat 128 engaging step 114 of inlet port 40, protrusions 140 are engaged through apertures 116 with disc 130 abutting the corresponding surface of wall 42. As is shown in FIGURE 2, protrusions 140 have been inserted into apertures 116 and the heads thereof deformed to attach insert 126 to housing 24. Disc 130 extends beyond wall 42 to partially cover opening 118 of chamber 44. A circumferential gap 146 is formed between the outer tip of disc 130 and the wall of chamber 44, and a diffuser area 148 is formed between disc 130 and compressor backwall 100 between centrifugal flow compressor rotor 172 and gap 146 leading to chamber 44.

Referring still to FIGURE 2, bearing support cylinder 60 is supported concentrically within inlet port 40 by a plurality of vanes 62 extending inwardly from wall surface 64 of port 40. Turbocharger 20 further includes a shaft 160 supported for rotation in bearing support cylinder 60 by two ball bearing assemblies 162 and 164. A radial flow turbine rotor 170 is mounted at one end of shaft 160 and a centrifugal flow compressor rotor 172 is mounted intermediate of turbine rotor 170 and bearing assemblies 162 and 164. Shaft 160 passes through aperture 176 in compressor backwall 100 and labyrinth seal 174 in turbine backwall 102.

Turbine rotor 170 is fixedly attached to shaft 160, such as by welding, and compressor rotor 172 is retained in position on shaft 160 by retainer nut 180. Compressor rotor 172 is drilled to receive shaft 160 and counterbored to form a bore 182. Bore 182 has a diameter larger than the outer diameter of retainer nut 180 such that retainer nut 180 may be pressed onto shaft 160 into engagement with the bottom wall 184 of bore 182 to retain the compressor rotor in position on shaft 160. Such arrangement is described in co-pending European Patent Application EP—A—111,782 which is also a divisional application of European Patent Application EP—A—30,230. A compressor rotor shim 186 is positioned between compressor rotor 172 and a step 188 in shaft 160 to accurately position the compressor rotor in the axial direction.

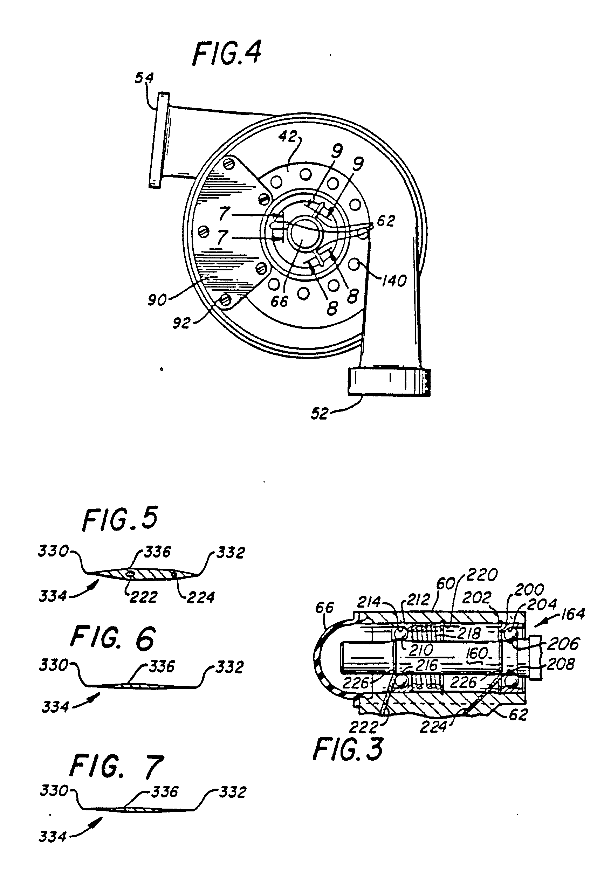

Referring to FIGURES 2 and 3, a ring 200 is fitted within the end of cylinder 60 adjacent compressor rotor 172 and is prevented from moving into cylinder 60 by a retaining ring 202 attached to cylinder 60. Outer raceway 204 of bearing assembly 164 is formed in ring 200, the inner raceway 206 being integrally formed in shaft 160. Balls 208 are engaged between the inner and outer raceways to form bearing assembly 164.

Bearing assembly 162 includes inner raceway 210 formed integrally in shaft 160 and an outer ring 212 slidable within cylinder 60 with an outer raceway 214 formed therein for receiving balls 216. A compression spring 218 is engaged between ring 212 and a retaining ring 220 fixed within cylinder 60 and biases ring 212 outwardly to fix the position of balls 216 and 208 in bearing assemblies 162 and 164, respectively, thereby fixing the position of shaft 160.

As is shown in FIGURES 2 and 3, outer raceway 204 is formed in ring 200 with the ball radius on only one side. Thus, the assembly of bearing assembly 164 is made by positioning a full complement of balls 208 in raceway 206, and engaging ring 200 therearound. Similarly, outer raceway 214 is formed in ring 212 with the ball radius on only one side. Balls 216 of bearing assembly 162 are assembled by moving outer ring 212 to compress spring 218 and inserting a full complement of balls 216 in raceway 214 of shaft 160. By releasing ring 212, spring 218 automatically forces the ring into engagement with balls 216 to form bearing assembly 162 while simultaneously engaging ring 200 against balls 208 of bearing assembly 164.

Alternatively, less than a full complement of balls 208 and 216 may be used in bearing assemblies 162 and 164 by the use of an appropriate retainer. Depending upon the application, an oil impregnated retainer or a sacrificial retainer which replenishes a self-lubricating coating to the balls may be used. The mounting of shaft 160 within cylinder 60 is completed by the engagement of cap 66 on the end of cylinder 60 to close the opening in cylinder 60 remote from compressor rotor 172.

The use in the present bearing system of the ball bearing arrangement employing integral inner raceways permits a larger diameter shaft and thus provides a very "stiff" shaft. Additionally, this bearing arrangement provides a very tight bearing system permitting very little radial or axial movement. As a result, the present bearing system substantially reduces the clearance required between the compressor and turbine and surrounding housing, and concentricity problems are minimized.

In the embodiment, bearing assemblies 162 and 164 are "starved" of oil. The only lubrication provided to the bearing assemblies is through wicks 222 and 224 which transfer oil from a reservoir R by capillary action to ramps or slingers 226. Oil supplied to slingers 226 is projected by centrifugal force to bearing assemblies 162 and 164 during rotation of shaft 160.

In this way, the use of engine oil as a lubricant for the turbocharger bearings, and the associated plumbing and seals are eliminated. Moreover, the failures resulting from the use of contaminated engine oil as a lubricant or the lack of engine oil during starts is avoided. Moreover, no oil seals are required and bearing failure resulting from the failure of seals is also eliminated.

In conventional turbochargers where journal bearings and disc type thrust bearings are employed, continuous lubrication of the bearings is required. Additionally, because the turbine is subjected to temperatures up to 871°C (1600°F), where the bearings are adjacent the turbocharger turbine, continuous lubrication is required to sufficiently cool the bearings to prevent failure through overheating. Even ball bearings would require a continuous flow of oil for cooling. The ability of the present system to successfully function without conventional flood lubrication used to both lubricate and cool the bearings is the result of the particular arrangement of the type of bearings used in the present invention and the relative location of the bearings to the compressor and turbine.

Because the present invention eliminates the need for a continuous flow of oil for bearing lubrication and cooling, the present turbocharger may be mounted at any desired orientation. In contrast, conventional turbochargers have been severely limited as to their possible orientation.

In the present invention, the journal and disc bearings of conventional turbochargers are replaced by the more precise ball type bearing assemblies, thereby eliminating the need for a continuous flow of lubrication for the bearings. Additionally, both the compressor and the turbine of the present turbocharger are overhung to one side of the bearing assemblies, and the turbine is maximally removed from the bearing assemblies with the compressor positioned between the bearing assemblies and the turbine. As this arrangement provides sufficient thermal insulation between the turbine and the bearing assemblies, the bearings will not be sufficiently heated as to require conventional lubrication methods.

The back to back compressor/turbine arrangement of the present turbocharger not only reduces substantially the heat conducted to the bearing assemblies but also minimizes the thermal expansion effects, thereby lowering the blade tip clearances required. This arrangement further eliminates the conventional bearing housing and provides a more compact package than present straddle mounted rotors having the support bearings intermediate of the compressor and turbine.

Additionally, the use of antifriction ball bearing assemblies 162 and 164 provides much better control over the radial and axial movement of the compressor and turbine, thereby allowing reduced blade tip clearance. This in turn appreciably improves the compressor and turbine efficiency. Compared to journal bearings, the use of the antifriction ball bearing assemblies 162 and 164 also reduces the turbine work required to drive the bearings. This in turn reduces the engine back pressure resulting in the improvement of the specific fuel consumption as well as enhancing the ability to accelerate the rotor.

FIGURE 4, and section views 5, 6 and 7, illustrate the positioning and configuration of vanes 62. Referring to FIGURES 5, 6 and 7, each of the vanes 62 has a leading edge 330 and a trailing edge 332 with a thicker intermediate midsection 334. In each case, the thickest midsection is that indicated by a line 336 defining the parting line between molds 290 and 292 used in the formation of housing unit 24. Thus, vanes 62 may be formed by die-casting using molds to produce the desired airfoil configuration of a leading and trailing edge separated by a thicker midsection therebetween. This configuration, shown in FIGURES 5, 6 and 7, greatly facilitates the ingress of air into the compressor inlet area, and in the present configuration, may be cast using well known die-casting techniques. For the form of the turbocharger housing and the way of producing such housing it is referred to co-pending European Patent Application EP—A—122,328 which is also a divisional application of European Patent Application EP—A—30,230.

## Claims

1. A bearing assembly structure (162, 164) for supporting the rotation of a compressor rotor (172) and a turbine rotor (170) mounted for rotation on a compressor shaft (160), having first and second inner raceways (206, 210) provided on said compressor shaft (160), an outer sleeve housing (60) having a first outer raceway (200) fixed relative thereto corresponding to the first inner raceway (206) for receiving a plurality of balls (206) between said first outer raceway (200) and said first inner raceway (206), a second outer raceway (212) corresponding to said second inner raceway (210) for receiving a plurality of balls (216) between said second outer raceway (212) and said second inner raceway (210), said first outer raceway (200) has a curved ball receiving surface only on the side facing away from said second outer raceway (212), said second outer raceway (212) has a curved ball receiving surface only on the side facing away from said first outer raceway (200), and spring means (218) for biasing a ring comprising said second outer raceway (212) away from said first outer raceway (200) to retain the balls (208, 216) between said inner and outer raceways, characterized in that said first outer raceway (200) is fixed relative to said outer sleeve housing (60), that said first and second inner raceways (206, 210) are formed in said compressor shaft (160), that a first inclined circumferential ramp (226) is formed in said compressor shaft (160) and angled toward the balls (208) positioned between the first inner and outer raceways (206, 200) and lubricant supplying means are provided for supplying lubricant to said first inclined ramp (226) through a wick (224) with one end in contact with the lubricant and the opposite end in contact with the first inclined ramp (226) such that lubricant is applied to the first inclined ramp (226) and carried by centrifugal force to the balls (208) during rotation of said compressor shaft (106) and that a second inclined circumferential ramp (226) is formed in said compressor shaft (160) and angled toward the balls (216) positioned between the second inner and outer raceways (210, 212) and lubricant supplying means are provided for supplying a lubricant to said second inclined ramp (226) through a wick (222) having one end in contact with the lubricant and the opposite end in contact with the second inclined ramp (226) such that said lubricant is applied to the second inclined ramp (226) and carried by centrifugal force to the balls (216) during rotation of said compressor shaft (160).

2. The bearing assembly structure according to Claim 1, characterized in that said first outer raceway (200) comprises a raceway ring fixed to said outer sleeve housing (60).

3. The bearing assembly structure according to Claim 1 or 2, characterized by said outer sleeve housing (60) comprising a cylinder supported by a plurality of vanes (62) attached to and extending inwardly from the inside wall of the inlet port (50) to the compressor housing (24).

4. The bearing structure according to Claim 3, characterized in that the vanes (62) have a leading edge (33) remote from said compressor and a trailing edge (332) facing said compressor, said leading and trailing edge (330, 332) being separated by a thicker intermediate vane section (334).

## Patentansprüche

1. Lageranordnungsstruktur (162, 164) zur Halterung der Drehung eines Kompressorrotors (172) und eines Turbinenrotors (170), die zur Drehung auf einer Kompressorwelle (160) befestigt sind, mit ersten und zweiten inneren Laufbahnen (206, 210) auf der Kompressorwelle (160), einem äußeren Buchsengehäuse (60) mit einem ersten äußeren Laufweg (200) bezüglich diesem entsprechend dem ersten inneren Laufweg (206) zur Aufnahme mehrerer Kugeln (206) zwischen dem ersten äußeren Laufweg (200) und dem ersten inneren Laufweg (206) befestigt, einem zweiten äußeren Laufweg (212) entsprechend dem zweiten inneren Laufweg (210) zur Aufnahme mehrerer Kugeln (216) zwischen dem zweiten äußeren Laufweg (212) und dem zweiten inneren Laufweg (210), wobei der erste äußere Laufweg (200) nur an der vom zweiten äußeren Laufweg (212) wegweisenden Seite eine gekrümmte Kugelaufnahmefläche hat, der zweite äußere Laufweg (212) nur an der vom ersten äußeren Laufweg (200) wegweisenden Seite eine gekrümmte Kugelaufnahmefläche hat und Federmittel (218) zum Belasten eines den zweiten äußeren Laufweg (212) umfassenden Ringes weg vom ersten äußeren Laufring (200) aufweist, um die Kugeln (208, 216) zwischen den inneren und äußeren Laufwegen zu halten, dadurch gekennzeichnet, daß der erste äußere Laufweg (200) bezüglich des äußeren Buchsengehäuses (60) fixiert ist, daß der erste und der zweite innere Laufweg (206, 210) an der Kompressorwelle (160) ausgebildet sind, daß eine erste geneigte Umfangsrampe (226) an der Kompressorwelle (160) ausgebildet und zu den zwischen den ersten inneren und äußeren Laufwegen (206, 200) befindlichen Kugeln (208) geneigt ist und Schmiermittelzuführmittel zur Zufuhr vom Schmiermittel zu der ersten geneigten Rampe (226) durch einen Docht (224) vorgesehen sind, der mit einem Ende in Berührung mit dem Schmiermittel und dem gegenüberliegenden Ende in Berührung mit der ersten geneigten Rampe (226) steht, so daß der ersten geneigten Rampe (226) Schmiermittel zugeführt und während der Drehung der Kompressorwelle (106) durch Zentrifugalkraft zu den Kugeln (208) getragen wird, und daß eine zweite geneigte Umfangsrampe (226) an der Kompressorwelle (160) ausgebildet und zu den zwischen den zweiten inneren und äußeren Laufwegen (210, 212) befindlichen Kugeln (216) geneigt ist und Schmiermittelzuführmittel zur Zufuhr von Schmiermittel zu der zweiten geneigten Rampe (226) durch einen Docht (222) vorgesehen sind, der mit einem Ende in Berührung mit dem Schmiermittel und dem gegenüberliegenden Ende in Berührung mit der zweiten geneigten Rampe (226) steht, so daß der zweiten geneigten Rampe (226) Schmiermittel zugeführt und während der Drehung der Kompressorwelle (106) durch Zentrifugalkraft zu den Kugeln (216) getragen wird.

2. Lageranordnungsstruktur nach Anspruch 1, dadurch gekennzeichnet, daß der erste äußere Laufweg (200) aus einem am äußeren Buchsengehäuse (60) befestigten Laufring besteht.

3. Lageranordnungsstruktur nach Anspruch 1 oder 2, dadurch gekennzeichnet, daß das Buchsengehäuse (60) einen Zylinder umfaßt, der von mehreren Schaufeln (62) gehalten ist, die an der Innenwand der Einlaßöffnung (50) angebracht sind und sich von dieser nach innen zum Kompressorgehäuse (24) erstrecken.

4. Lagerstruktur nach Anspruch 3, dadurch gekennzeichnet, daß die Schaufeln (62) eine vordere Kante (33) entfernt vom Kompressor und eine hintere Kante (332) dem Kompressor zugewandt haben, wobei die vordere und die hintere Kante (330, 332) durch einen dickeren Zwischenflügelabschnitt (334) getrennt sind.

**Revendications**

1. Structure d'ensemble de paliers (162, 164) destinée à soutenir la rotation d'un rotor de compresseur (172) et d'un rotor de turbine (170) montés sur un arbre de compresseur (160) de façon à se déplacer en rotation, comprenant des premier et second chemins intérieurs de roulement (206, 210) prévus sur cet arbre de compresseur (160), une enveloppe extérieure en forme de manchon (60) présentant un premier chemin extérieur de roulement (200) qui est fixe par rapport à lui et correspond au premier chemin intérieur de roulement (206) en vue de recevoir un jeu de billes (206) disposées entre ce premier chemin extérieur de roulement (200) et ce premier chemin intérieur de roulement (206), un second chemin extérieur de roulement (212) correspondant au second chemin intérieur de roulement (210) en vue de recevoir un jeu de billes (216) entre ce second chemin extérieur de roulement (212) et ce second chemin intérieur de roulement (210), le premier chemin extérieur de roulement (200) présentant une surface courbe de réception des billes uniquement sur le côté tourné à l'opposé du second chemin extérieur de roulement (212), ce second chemin extérieur de roulement (212) présentant une surface courbe de réception de billes uniquement sur le côté tourné à l'opposé du premier chemin extérieur de roulement (200), et des moyens élastiques (218) repoussant une bague comportant ledit second chemin extérieur de roulement (212), à l'écart du premier chemin extérieur de roulement (200) de façon à retenir les billes (208, 216) entre les chemins intérieurs et extérieurs de roulement, caractérisée en ce que le premier chemin extérieur de roulement (200) est fixe par rapport à l'enveloppe extérieure en forme de manchon (60), en ce que les premier et second chemins intérieurs de roulement (206, 210) sont formés dans l'arbre de compresseur (160), en ce qu'une première rampe circonférencielle inclinée (226) est formée dans cet arbre de compresseur (160) et forme un angle de façon à être dirigée vers les billes (208) disposées entre les premiers chemins intérieur et extérieur de roulement (206, 200) et des moyens de fourniture de lubrifiant sont prévus pour fournir du lubrifiant à cette première rampe inclinée (226) par l'intermédiaire d'une mèche (224) présentant une extrémité en contact avec le lubrifiant et l'extrémité opposée en contact avec cette première rampe inclinée (226) de façon que du lubrifiant soit appliqué à cette première rampe inclinée (226) et soit transporté par la force centrifuge jusqu'aux billes (208) au cours de la rotation de l'arbre de compresseur (106), et en ce qu'une seconde rampe circonférencielle inclinée (226) est formée dans cet arbre de compresseur (160) et forme un angle de façon à être dirigée en direction des billes (216) disposées entre les seconds chemins intérieur et extérieur de roulement (210, 212) et des moyens de fourniture de lubrifiant sont prévus pour fournir un lubrifiant à cette seconde rampe inclinée (226) par l'intermédiaire d'une mèche (222) présentant une extrémité en contact avec le lubrifiant et l'extrémité opposée en contact avec cette seconde rampe inclinée (226), de sorte que ce lubrifiant est appliqué sur cette seconde rampe inclinée (226) et est transporté par la force centrifuge jusqu'aux billes (216) au cours de la rotation de l'arbre de compresseur (160).

2. Structure d'ensemble de paliers selon la revendication 1, caractérisée en ce que le premier chemin extérieur de roulement (200) est constitué par une bague à chemin de roulement fixée sur l'enveloppe extérieure en forme de manchon (60).

3. Structure d'ensemble de paliers selon la revendication 1 ou 2, caractérisée en ce que l'enveloppe extérieure en forme de manchon (60) est constituée par un cylindre porté par une série d'ailettes (62) qui sont fixées sur la paroi intérieure de l'orifice d'entrée (50) et sur le carter de compresseur (24) et qui s'étendent vers l'intérieur depuis cette paroi jusqu'à ce carter.

4. Structure de palier conforme à la revendication 3, caractérisée en ce que les ailettes (62) présentent un bord d'attaque (330) situé à l'opposé par rapport au compresseur et un bord de fuite (332) dirigé vers ce compresseur, ces bords d'attaque et de fuite (330, 332) étant séparés par une section intermédiaire d'ailette (334) plus épaisse.

*FIG. 1*

*FIG. 2*

0 121 670

## FIG.4

54

42

9  9

7  7

62

90

66  8  8

92

140

52

## FIG.5

330  336  332

334  222  224

## FIG. 6

330  336  332

334

## FIG. 7

330  336  332

334

66  214  212  60  220  202  200  204  164

218

210  160  206

216  208

226  226

222  224  62

## FIG.3

2